# DEMANDE DE BREVET EUROPEEN

(11) **EP 1 365 317 A1**
(43) Date de publication de la demande: **26.11.2003**
(21) Numéro de dépôt: 03354045.1
(22) Date de dépôt: 26.05.2003
(51) Int. Cl.: G06F 7/72

(54) **Test d'un algorithme exécuté par un circuit integré**

(30) Priorité: 24.05.2002 FR 0206365
(71) Demandeur: STMicroelectronics S.A., 92120 Montrouge (FR)
(72) Inventeur: Teglia, Yannick, 13011 Marseille (FR)
(74) Mandataire: de Beaumont, Michel

(57) **Abrégé**

L'invention concerne un procédé de test de résistance d'un algorithme mettant en oeuvre au moins une quantité secrète (KEY) contre des attaques mesurant des effets physiques de l'exécution de l'algorithme par un circuit intégré, consistant à mettre en oeuvre des fonctions statistiques de recherche de clé à partir d'hypothèses sur au moins certains bits de celle-ci, en exploitant les valeurs d'entrée et de sortie d'étapes (STEP) de l'algorithme.

## Description

La présente invention concerne le domaine des algorithmes mis en oeuvre par des circuits intégrés. L'invention concerne plus particulièrement les algorithmes de chiffrement, de cryptage ou analogue mettant en oeuvre des données ainsi qu'une ou plusieurs clés secrètes utilisées par l'algorithme pour chiffrer ces données. On fera par la suite référence à des algorithmes de chiffrement mettant en oeuvre des clés secrètes et des données mais on notera que l'invention s'applique, de façon plus générale, à toute fonction ou série de fonctions de calcul ou de combinaison de données d'entrée et d'une ou plusieurs clés et/ou d'un ou plusieurs mots aléatoires, dans le but de fournir un ou plusieurs messages chiffrés à l'extérieur du circuit intégré.

Dans ce genre d'application, on cherche généralement à qualifier l'algorithme, c'est-à-dire à évaluer sa résistance à des tentatives d'attaques externes par des utilisateurs non autorisés souhaitant percer le "secret" de la ou des clés utilisées ou du chiffrement mis en oeuvre par l'algorithme. Une telle qualification d'un algorithme s'effectue vis-à-vis d'un type d'attaque donné, c'est-à-dire d'une méthode d'analyse susceptible d'être mise en oeuvre par un pirate éventuel.

L'invention concerne plus particulièrement la qualification d'un algorithme par rapport à des attaques dites en consommation ou en courant qui consistent à corréler la consommation du circuit intégré aux variables internes de l'algorithme. Ces variables sont fonctions à la fois des données d'entrée et de la clé que l'on cherche et qui est utilisée par le circuit intégré. Cette clé est contenue dans un élément de mémorisation du circuit intégré et est donc connue de celui-ci mais pas de l'extérieur. De telles attaques en consommation sont décrites dans la littérature (voir par exemple, l'article "Differential Power Analysis" de Paul Kocher, Joshua Jaffe et Benjamin Jun, paru en 1999, Conférence CRYPTO 99, pages 388-397, publié par Springer-Verlag LNCS 1666) et sont connues par leur appellation anglo-saxonne "Differential Power Analysis" (DPA).

Une méthode classique pour tester la résistance d'un algorithme à des attaques de ce type consiste à utiliser un dispositif similaire à celui utilisé pour réaliser une telle attaque, afin d'étudier le comportement de l'algorithme.

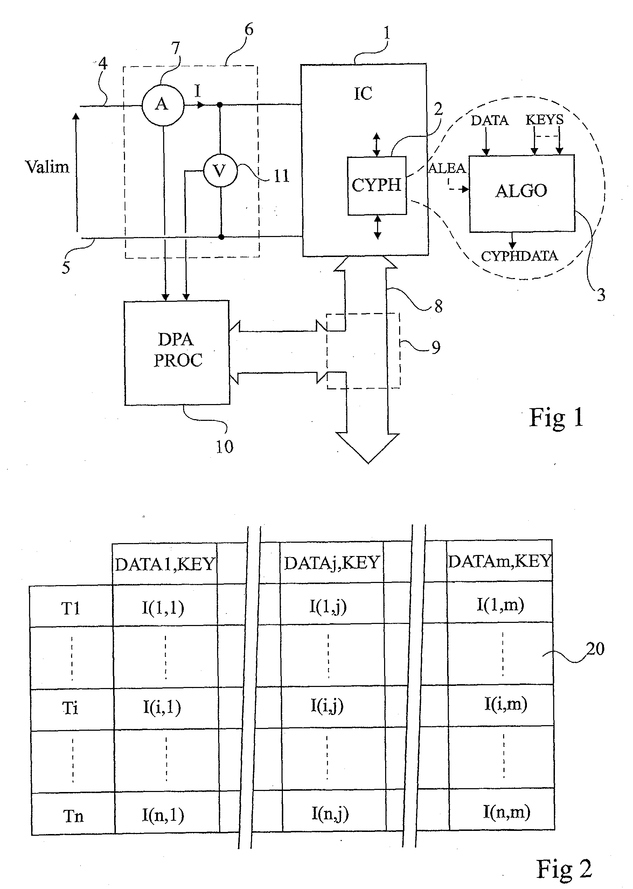

La figure 1 représente, de façon très schématique et sous forme de blocs, un exemple classique de système d'attaque d'un algorithme exécuté par un circuit intégré 1 (IC) par analyse de sa consommation, ou de test de la résistance d'un algorithme contre des attaques par analyse de la consommation d'un circuit intégré 1 exécutant cet algorithme.

L'algorithme ALGO à tester (ou à attaquer) est généralement contenu dans un bloc 2 spécifique (CYPH) du circuit intégré 1. Ce bloc 2 a essentiellement pour rôle d'exécuter un algorithme (bloc 3, détail de la figure 1) ou une fonction servant, par exemple, au chiffrement/déchiffrement de données DATA. De façon générale, les données DATA sont constituées par n'importe quel mot numérique et il peut s'agir de programmes ou de données proprement dites. L'algorithme ALGO chiffre des données DATA d'entrée et fournit des données de sortie CYPHDATA à partir d'une ou plusieurs clés KEYS et, le cas échéant, d'un ou plusieurs nombres aléatoires ALEA.

En figure 1, on s'est contenté de représenter, dans le circuit intégré 1, le bloc de chiffrement 2, le reste du circuit intégré étant quelconque. De même, l'invention s'applique à n'importe quel algorithme ALGO. Il pourra s'agir d'un algorithme de chiffrement symétrique ou asymétrique, et la ou les clés utilisées peuvent être contenues dans le circuit 1 ou provenir de l'extérieur.

Pour une analyse statistique de la consommation du circuit intégré 1 lors de l'exécution de l'algorithme 3, on intercale, sur une des lignes 4, 5 d'alimentation par une tension Valim du circuit 1, un dispositif 6 ayant pour rôle de mesurer le courant I consommé par le circuit 1. La mesure effectuée, par exemple par un ampèremètre 7 (A) intercalé sur la ligne 4, est fournie à un processeur de traitement 10 (DPA PROC) chargé de corréler le courant consommé I à la clé recherchée. Pour ce faire, ce processeur 10 exploite des signaux d'entrée-sortie du circuit intégré. Ces signaux ont été arbitrairement illustrés par un bus 8 d'entrée-sortie du circuit 1 sur lequel est intercalé un dispositif 9 de dérivation vers le processeur 10. Le cas échéant, la tension d'alimentation du circuit 1 est également contrôlée par le processeur 10 (par exemple au moyen d'un voltmètre 11 (V) connecté entre les lignes 4 et 5).

Les dispositifs 6, 9 et 10 décrits en relation avec la figure 1 représentent en fait les dispositifs utilisés pour mettre en oeuvre des attaques par analyse de la consommation du circuit 1. Pour tester la résistance du circuit intégré à de telles attaques, on utilise classiquement le même genre de dispositifs.

La figure 2 illustre, sous forme de tableau 20, un exemple classique de mise en oeuvre d'un test de résistance aux attaques de type analyse statistique de consommation en courant d'un circuit intégré tel que représenté en figure 1. Dans l'exemple de la figure 2, on suppose pour simplifier qu'une seule clé secrète KEY est prise en compte par l'algorithme.

On génère, par exemple de façon aléatoire ou pseudo-aléatoire, des ensembles de données DATAj (j étant compris entre 1 et m) que l'on soumet en entrée de l'algorithme (bloc 3, figure 1).

A intervalle régulier d'exécution de l'algorithme (instants Ti, i étant compris entre 1 et n), on mesure le courant I(i,j) d'alimentation du circuit intégré. L'ensemble des mesures de courant I(i,j) est mémorisé. Plus l'intervalle régulier entre les instants Ti de mesure est court, meilleure est la précision de l'analyse. Les courants mesurés sont fonction de la clé KEY contenue dans le circuit intégré.

On effectue alors, au sein du processeur 10, des hypothèses sur tout ou partie de la clé KEY que l'on corrèle aux mesures (acquisitions) de consommation.

De façon connue, on analyse les réponses en courant (l'ensemble des courants mesurés) aux différents instants. Pour tester la résistance du circuit intégré 1 aux attaques par analyse de la consommation, on vérifie que la clé n'est pas retrouvée au bout d'un certain nombre d'essais par une attaque DPA. On fixe en fait un seuil de nombre d'essais au-delà duquel, si la clé n'est pas trouvée, l'algorithme est considéré comme résistant. Ces tests de résistance s'effectuent donc sur un composant final (par exemple, une carte à puce).

Un inconvénient de la méthode classique, est que l'on teste en fait la résistance de l'ensemble du circuit à une attaque par analyse statistique de la consommation. Par conséquent, les tests sont sensibles aux éventuels bruits parasites qui peuvent masquer des faiblesses de l'algorithme lui-même. De plus, de tels bruits sont liés à l'implémentation matérielle et peuvent donc conduire à valider un algorithme de par son implémentation, alors que celui-ci est en fait vulnérable aux attaques par analyse statistique de la consommation.

La présente invention vise à proposer une nouvelle solution pour valider ou tester la résistance d'un algorithme quelconque à des attaques par analyse statistique de la consommation du circuit intégré qui exécutera cet algorithme.

L'invention vise plus particulièrement à proposer une solution qui soit insensible aux bruits parasites d'une implémentation particulière.

L'invention vise également à proposer une solution qui soit indépendante du type du circuit intégré dans lequel sera chargé l'algorithme testé.

Pour atteindre ces objets et d'autres, la présente invention prévoit un procédé de test de résistance d'un algorithme mettant en oeuvre au moins une quantité secrète contre des attaques mesurant des effets physiques de l'exécution de l'algorithme par un circuit intégré, consistant à mettre en oeuvre des fonctions statistiques de recherche de clé à partir d'hypothèses sur au moins certains bits de celle-ci, en exploitant les valeurs d'entrée et de sortie d'étapes de l'algorithme.

Selon un mode de mise en oeuvre de la présente invention, on mémorise, pour différentes données d'entrée, les valeurs d'entrée et de sortie de chacune desdites étapes de l'algorithme, et on applique lesdites fonctions statistiques de recherche de clé aux valeurs mémorisées.

Selon un mode de mise en oeuvre de la présente invention, on mémorise, pour différentes données d'entrée, un résultat combinant, pour chacune desdites étapes de l'algorithme, les valeurs d'entrée et de sortie, et on applique lesdites fonctions statistiques de recherche de clé aux résultats combinés.

Selon un mode de mise en oeuvre de la présente invention, ladite grandeur physique est la consommation en courant d'un circuit intégré mettant en oeuvre l'algorithme.

Selon un mode de mise en oeuvre de la présente invention, ladite grandeur physique est le rayonnement électromagnétique d'un circuit intégré mettant en oeuvre l'algorithme.

Selon un mode de mise en oeuvre de la présente invention, ladite grandeur physique est la température d'un circuit intégré mettant en oeuvre l'algorithme.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 qui a été décrite précédemment représente, schématiquement et sous forme de blocs, un exemple classique de système d'attaque par analyse statistique de la consommation d'un circuit intégré exécutant un algorithme ;
la figure 2 décrite précédemment illustre la mise en oeuvre d'un test classique de la résistance d'un algorithme à des attaques par analyse statistique de la consommation d'un circuit intégré le mettant en oeuvre ;
la figure 3 illustre de façon simplifiée, un algorithme de chiffrement du type auquel s'applique la présente invention ; et
la figure 4 illustre un mode de mise en oeuvre du procédé de test selon l'invention.

Une caractéristique de la présente invention est de tester la résistance à une analyse statistique de la consommation à partir de l'algorithme lui-même, c'est-à-dire à partir des données d'entrée et de sortie des différentes étapes mises en oeuvre par cet algorithme. Ainsi, l'invention prévoit de remplacer les mesures de courant faites sur le circuit intégré fini, par les valeurs manipulées par l'algorithme lui-même.

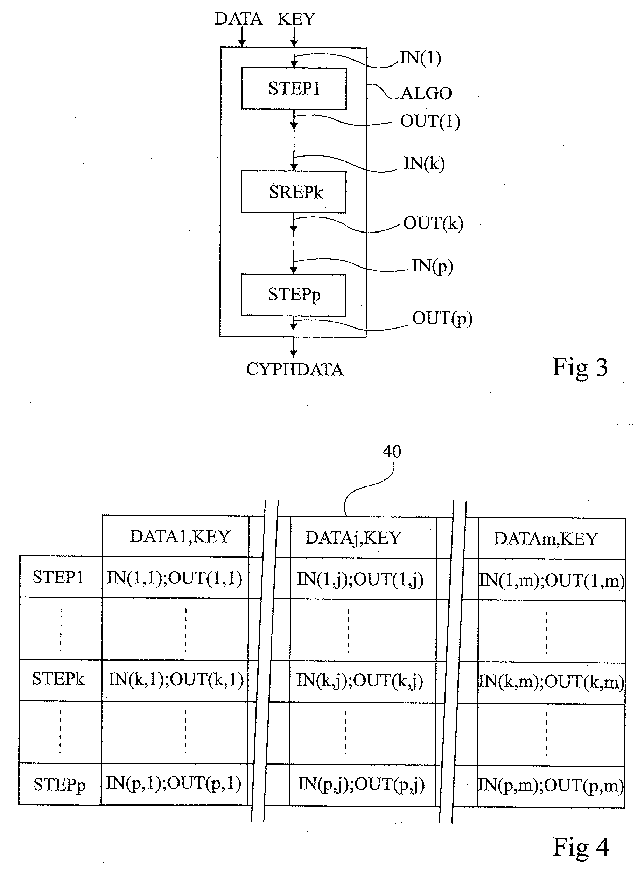

La figure 3 illustre, sous forme de blocs, un exemple d'algorithme ALGO dont on souhaite tester la résistance contre des attaques de type DPA selon un mode de mise en oeuvre de l'invention. L'algorithme reçoit, en entrées, une donnée (DATA) et une clé secrète (KEY). Pour simplifier, on considère le cas d'une clé unique KEY. On notera toutefois que ce qui suit s'applique également à un algorithme recevant en entrées plusieurs clés et, le cas échéant, un ou plusieurs aléas. La seule différence est dans le nombre d'hypothèses effectuées pour les attaques DPA, donc pour les tests de résistance.

Un algorithme quelconque comprend plusieurs étapes illustrées en figure 3 par des blocs (STEP1, STEPk, STEP). L'algorithme fournit, dans cet exemple, une donnée chiffrée (CYPHDATA). Chaque étape traite une ou plusieurs grandeurs d'entrée IN(k) et fournit une ou plusieurs grandeurs OUT(k).

La figure 4 illustre un mode de mise en oeuvre du procédé de test selon l'invention, appliqué à un procédé du type de celui de la figure 3.

On génère, à la manière d'un procédé classique, plusieurs ensembles de données (DATAj, KEY), la clé KEY correspondant à une valeur choisie arbitrairement (pour simuler la clé qui sera contenue dans un circuit intégré exécutant l'algorithme) que l'on cherche à retrouver par le procédé de test.

Selon l'invention, on mémorise, pour les différentes étapes STEPk mises en oeuvre par l'algorithme ALGO, les paramètres et/ou valeurs d'entrée IN(k,j) et de sortie OUT(k,j) de l'étape considérée. On obtient alors, pour chaque ensemble de rang j (DATAj, KEY), p ensembles de valeurs d'entrée et de sortie {IN(k,j), OUT(k,j), k étant compris entre 1 et p}, comme l'illustre le tableau 40 de la figure 4.

Selon l'invention, on considère que lorsqu'il exécute une fonction ou étape donnée, mettant en oeuvre des grandeurs d'entrée, l'algorithme consomme une certaine quantité de courant. Classiquement, c'est l'intensité du courant qui est stockée dans le fichier de mesure à des intervalles de temps réguliers (figure 2). En fait, l'intensité est l'image en courant des données manipulées à cet instant par le circuit intégré. Selon l'invention, on stocke directement les valeurs manipulées. De plus, plutôt que d'effectuer ces mémorisations à intervalles réguliers, on exploite les caractéristiques mêmes de l'algorithme en utilisant les données de ses différentes étapes. En effet, si les variables internes sont décorrelées de la clé manipulée, il n'y a pas de raison que l'analyse de la consommation procure un résultat exploitable concernant l'algorithme.

On applique alors des fonctions de corrélation classiques pour déterminer au bout de combien d'acquisitions d'ensembles (j) de données traités, la clé est découverte.

Un avantage de l'invention est que l'analyse des corrélations n'est plus polluée par du bruit. Ainsi, c'est réellement l'algorithme que l'on teste pour sa résistance contre des attaques par analyse statistique de la consommation.

La mise en oeuvre de l'invention reflète bien une analyse en courant dans la mesure où le composant intégrant l'algorithme consommera en fonction des données manipulées.

Un autre avantage de l'invention est qu'elle permet de qualifier ou valider la résistance d'un algorithme avant même l'implémentation pratique de l'algorithme dans un circuit intégré. On réalise ainsi de considérables économies pour le cas où l'algorithme testé se révélerait particulièrement vulnérable.

Le nombre de données ou paramètres mémorisés pour chaque exécution de l'algorithme dépend bien entendu du nombre de fonctions ou étapes de cet algorithme. Il est clair que la fiabilité du test dépend des paramètres stockés. En particulier, le test ne sera fiable que si toutes les valeurs manipulées par l'algorithme ou au moins ses valeurs significatives ont été stockées pour corrélation.

Selon une variante, on ne stocke pas les valeurs IN et OUT mais, pour chaque étape STEPk, le résultat d'une fonction combinant ces valeurs, par exemple une fonction visant à reproduire le comportement électrique du composant, le but étant d'anticiper le comportement réel du produit aux attaques dont on cherche à se prémunir.

La fonction de corrélation statistique mise en oeuvre pour détecter la clé de l'algorithme est une fonction du type de celles classiquement mises en oeuvre pour les attaques en courant. De même, les hypothèses à effectuer sur la ou les clés reprennent les méthodes classiques. A titre d'exemple, on pourra se référer à l'article "Differential Power Analysis" cité ci-dessus.

On notera que la mise en oeuvre de l'invention n'exclut pas une vérification finale du composant fabriqué pour s'assurer que l'implémentation n'a pas conduit à une régression du point de vue de la sécurité contre des attaques en courant.

Bien entendu, la présente invention est susceptible de diverses variantes et modifications qui apparaîtront à l'homme de l'art. En particulier, l'invention s'applique non seulement à la résistance théorique des algorithmes aux attaques par analyse statistique de consommation mais plus généralement à toute attaque exploitant des mesures d'effets physiques de l'exécution d'un algorithme sur le circuit qui l'exécute, en utilisant des fonctions statistiques de recherche d'au moins une clé à partir d'hypothèses sur au moins certains bits de celle-ci. Par exemple, la grandeur physique pourra être, plutôt que la consommation, un rayonnement électromagnétique ou la température. De plus, si toutes les étapes de l'algorithme sont prises en compte, la donnée de sortie OUT(k) d'une étape donnée correspond à la donnée d'entrée IN(k-1) de l'étape suivante. On pourra en tenir compte pour la mémorisation.

## Revendications

1. Procédé de test de résistance d'un algorithme (ALGO) mettant en oeuvre au moins une quantité secrète (KEY) contre des attaques mesurant des effets physiques de l'exécution de l'algorithme par un circuit intégré (1), **caractérisé en ce qu'**il consiste à mettre en oeuvre des fonctions statistiques de recherche de clé à partir d'hypothèses sur au moins certains bits de celle-ci, en exploitant les valeurs d'entrée (IN) et de sortie (OUT) d'étapes (STEP) de l'algorithme.

2. Procédé selon la revendication 1, **caractérisé en ce qu'**il consiste à mémoriser, pour différentes données d'entrée (DATAj), les valeurs d'entrée (IN(k,j)) et de sortie (OUT(k,j)) de chacune desdites étapes de l'algorithme, et à appliquer lesdites fonctions statistiques de recherche de clé aux valeurs mémorisées.

3. Procédé selon la revendication 1, **caractérisé en ce qu'**il consiste à mémoriser, pour différentes données d'entrée (DATAj), un résultat combinant, pour chacune desdites étapes de l'algorithme, les valeurs d'entrée (IN(k,j)) et de sortie (OUT(k,j)), et à appliquer lesdites fonctions statistiques de recherche de clé aux résultats combinés.

4. Procédé selon l'une quelconque des revendications 1 à 3, **caractérisé en ce que** ladite grandeur physique est la consommation en courant (I) d'un circuit intégré (1) mettant en oeuvre l'algorithme.

5. Procédé selon l'une quelconque des revendications 1 à 3, **caractérisé en ce que** ladite grandeur physique est le rayonnement électromagnétique d'un circuit intégré (1) mettant en oeuvre l'algorithme.

6. Procédé selon l'une quelconque des revendications 1 à 3, **caractérisé en ce que** ladite grandeur physique est la température d'un circuit intégré (1) mettant en oeuvre l'algorithme.
